# EUROPÄISCHE PATENTSCHRIFT

(11) **EP 1 482 147 B1**
(45) Veröffentlichungstag und Bekanntmachung des Hinweises auf die Patenterteilung: **16.03.2005**
(21) Anmeldenummer: 03011692.5
(22) Anmeldetag: 23.05.2003
(51) Int. Cl.: F02B 31/08, F02M 35/108

(54) **Luftansaugkrümmer in einem Verbrennungsmotor**
Intake manifold in an internal combustion engine
Collecteur d'admission dans un moteur à combustion interne

(43) Veröffentlichungstag der Anmeldung: 01.12.2004
(73) Patentinhaber: Mann + Hummel GmbH, 71638 Ludwigsburg (DE)
(72) Erfinder: Marimbordes, Thierry, Dr., 1020 Brüssel (BE); Durand, Christophe, 53260 Entrammes (BE)
(74) Vertreter: Voth, Gerhard, Dipl.-Ing.

(56) Entgegenhaltungen:
- EP-A- 0 867 610
- DE-C- 737 250
- US-A1- 2002 179 030
- US-B1- 6 234 131

## Beschreibung

Die vorliegende Erfindung betrifft einen Luftansaugkrümmer in einem Mehrzylinder-Verbrennungsmotor.

Bei dieser Art von Motoren sucht man nach einer Lösung, die Verbrennung des Kraftstoffes in den Zylindern zu optimieren, indem man das Gemisch aus Brennstoff und aus der als Sauerstoffträger verwendeten Luft während der Einlassphase verbessert. Bei den direkten oder indirekten Einspritzmotoren ist dies ein sehr ernsthaftes Problem im unteren Drehzahlbereich, weil kein Vergasersystem vorhanden ist, das in der Einlassluft den Brennstoff in Aerosol umwandelt. Das Problem wird im Allgemeinen dadurch gelöst, indem die Dynamik der Gase, die in jeden Zylinder des Motors eingeführt werden, kontrolliert wird. Bei den Motoren mit mehreren Einlassventilen pro Zylinder (und speziell mit zwei pro Zylinder) ist eine häufig verwendete Technik der "Swirl"-Effekt (oder eine Rotation der Gase, sobald diese in den Zylinder eintreten, um so eine Verwirbelung parallel zur Zylinderachse zu erzeugen, die sich günstig auf die Verbesserung des Luft-Kraftstoff-Gemisches auswirkt), den man dadurch erreicht, indem ein Teil der Ansaugrohre (und vorzugsweise eins von zwei) im unteren Drehzahlbereich geschlossen wird.

Die Patentanmeldung EP 1 083 310 zum Beispiel erläutert einen Ansaugkrümmer für Motoren, die mehr als ein Einlassventil pro Zylinder enthalten, der eigentlich aus einem zweifachen Ansaugkrümmer besteht (einen für jede Serie von Ansaugrohren), von denen ein Teil (jenes, das einer Serie von Ansaugrohren zugeordnet ist) mit einem Gehäuse versehen ist, welches ein Schieberventil enthält, mit dem die Rohre verschlossen werden können. Ein derartiges System mit zweifachem Ansaugkrümmer setzt die Herstellung und Montage einer größeren Menge von Teilen voraus mit allen damit verbundenen Personalkosten und Risiken bezüglich Fehler in der Dichtheit. Außerdem ist es sperrig.

Das Ziel der vorliegenden Erfindung ist es, diese Fehler zu beheben, indem ein Luftansaugkrümmer für Mehrzylindermotoren mit mehreren Einlassventilen pro Zylinder angeboten wird, mit dem ein "Swirl"-Effekt erreicht wird, der aber trotzdem sehr kompakt ist und mit einer geringen Zahl an Teilen, die leicht zusammengebaut werden können, realisiert wird.

Zu diesem Zweck betrifft die Erfindung einen Luftansaugkrummer in einem Mehrzylinder-Verbrennungsmotor, der eine Mischkammer, die durch eine Wand begrenzt ist und einen aus Rohren bestehenden Verteiler umfasst, der die Zylinder des Motors mit Luft versorgt, wobei die Mischkammer mindestens einige der Ansaugrohre integriert, wobei die Mischkammer im wesentlichen aus einem Gehäuse und einer durch Schweißen zusammengebauten Abdeckung besteht und der Luftansaugskrümmer in eine Zylinderkopfabdeckung integriert ist.

Mit Mehrzylinder-Verbrennungsmotor bezeichnet man einen Motor, der mindestens zwei Zylinder enthält, in denen ein Kolben eine Vorwärts- und Rückwärtsbewegung ausführt, die mittels eines Systems aus Pleuelstange und Kurbel in eine Drehbewegung umgewandelt wird und in dem die chemische Verbrennungsenergie des Kraftstoffs in die kinetische Drehenergie einer Welle umgewandelt wird. Vorzugsweise enthält jeder Zylinder mehrere Lufteinlassventile, über welche die Luft auf wirkungsvolle Weise den Zylindern zugeführt wird. Noch besser wäre es, wenn jeder Zylinder zwei Lufteinlassventile enthielte. Es muss bedacht werden, dass der Ansaugkrümmer gemäß der vorliegenden Erfindung ebenfalls für Motoren mit mehreren Kurbelwellen (oder in einem bestimmten Winkel angeordnete Zylinderreihen) geeignet ist. Dabei muss aber im Allgemeinen ein Ansaugkrümmer pro Zylinderkurbelwellen vorgesehen werden. Bei V-Motoren wird man deshalb im Allgemeinen zwei Ansaugkrümmer gemäß der vorliegenden Erfindung vorsehen.

Die Mischkammer des Ansaugkrümmers gemäß der vorliegendenErfindung wird im Allgemeinen über ein sogenanntes Haupteinlassrohr mit Luft versorgt, wo der Luftausstoß von einem Klappenventil genannten Schieber geregelt wird. Ihrerseits versorgt die Mischkammer die Luftansaugrohre (sogenannte sekundäre Rohre) zu den Zylindern des Motors, und dies so symmetrisch wie möglich, um die Belastung gleichmäßig in den einzelnen Zylindern zu verteilen. Gemäß der vorliegenden Erfindung versorgt die Mischkammer einen Teil der Einlassventile der Zylinder direkt (über integrierte Rohre), während der andere Teil über außerhalb der Mischkammer liegende Rohre versorgt wird. Unter "integrierte" Rohre versteht man Rohre, die vollständig innerhalb der Mischkammer angebracht sind und deren Öffnung (durch die Wand der Mischkammer hindurch) höchstens eine leichte Ausbuchtung hat, in der ein Verbindungsstück (z.B. eine Dichtung, wenn der Ansaugkrümmer ebenfalls als Zylinderkopfdeckel dient) untergebracht werden kann. Man erhält somit ein extrem kompaktes Teil, das aber trotzdem die Zylinder eines Motors gleichmäßig versorgen kann.

Die vorliegende Erfindung passt besonders gut zu Motoren mit zwei Einlassventilen pro Zylinder; in diesem Fall integriert die Mischkammer vorteilhaft die Hälfte der Luftansaugrohre.

Im Allgemeinen beinhalten die in der Mischkammer integrierten Rohre einen Teil der Wand der Mischkammer, welche eine für das reibungslose Auffüllen der Zylinder geeignete Form und einen geeigneten Platz haben. Es handelt sich dabei vorzugsweise um eine konische Form (d.h. mit einem variablen Durchmesser, vorzugsweise kontinuierlich, und der sich von oben nach unten verjüngt, um so das Entweichen der Luft zu begünstigen) und die in einer Öffnung endet, welche die direkte Luftzufuhr zu einem Einlassventil erlaubt. Außerdem kann es sich als vorteilhaft erweisen, wenn die Mischkammer ein oder mehrere hervorstehende Elemente in ihrem Inneren beinhaltet, die ein Hindernis darstellen und das Entweichen der Luft einschränken, um so eine optimale Verteilung der Luft zwischen den verschiedenen Zylindern des Motors zu erreichen.

Die nicht in der Mischkammer integrierten Ansaugrohre zeigen im Allgemeinen mindestens ein gekrümmtes Teil. Im Allgemeinen werden diese Rohre aus einem einzigen Teil zusammen mit mindestens einem Teil der Mischkammer hergestellt. Vorzugsweise ist mindestens ein Teil ihrer Wand gemeinsam mit der Wand der Mischkammer gestaltet.

Die Mischkammer des Ansaugkrümmers gemäß der vorliegenden Erfindung kann aus einem Teil hergestellt werden. In Anbetracht der Komplexität ihrer Form ist es allerdings von Vorteil, sie aus mindestens zwei Teilen herzustellen, wobei das eine Teil das Gehäuse des Ansaugkrümmers und das andere die Abdeckung ist. Diese Teile werden dann mittels einer geeigneten Technologie zusammengebaut ( d.h. einer Technologie, die einen sicheren und undurchlässigen Zusammenbau erlaubt), entweder mechanisch (z.B. durch Kleben oder mittels Bolzen, Schrauben, Flansche oder Klemmschellen) oder thermisch (durch Schweißen), aber vorzugsweise durch Schweißen. Vorzugsweise besteht die Mischkammer aus einem Gehäuse und einer Abdeckung, die durch Schweißen zusammengefügt worden sind. Eine geeignete Schweißtechnik ist das Vibrationsschweißen, vor allem, wenn dem Ansaugkrümmer gemäß der Erfindung Plastik zugrunde liegt. Ganz besonders von Vorzug ist es, wenn die externen Ansaugrohre aus einem Stück mit dem Gehäuse der Mischkammer hergestellt werden und in diesem Fall besteht der Ansaugkrümmer gemäß der Erfindung aus zwei Teilen, die vorzugsweise durch Schweißen zusammengefügt werden.

Dem Ansaugkrümmer gemäß der vorliegenden Erfindung kann Werkstoff zugrunde liegen, der eine geeignete mechanische und vor allem thermische Resistenz besitzt (im Hinblick auf die Nähe zum Motor). Es kann sich dabei um ein Metall wie z.B. Aluminium handeln. Vorzugsweise handelt es sich allerdings dabei um Kunststoff, und vorzugsweise um thermoplastisches Material, wie z.B. Polyamid (PA) und besonders um PA 6. Dieser Kunststoff enthält vorzugsweise einen Füllstoff wie z.B. Fasern (Glasfasern oder C-Fasern) oder Verfestiger (Talkum, Mika, Glaskugeln...). Die Glasfasern eignen sich ganz besonders gut, vor allem wegen eines Gewichtsgehaltes (in % im Vergleich zum Gesamtgewicht des Kunststoffes und des Füllstoffes) zwischen 10 und 40 %. Die auf der Grundlage von PA 6 und Glasfasern (insbesondere zu 35 % bezogen auf das Gewicht) hergestellte Verbundmasse gibt gute Resultate. Eine Mischung aus Metallen und/oder Kunststoffen kann ebenfalls als Material für den Ansaugkrümmer gemäß der vorliegenden Erfindung verwendet werden.

Das oder die Teile, aus denen der Ansaugkrümmer gemäß der vorliegenden Erfindung besteht, können mittels geeigneter Technologie aus dem gewünschten Material und der gewünschten Form hergestellt werden. Die Hierstellung mittels Guss ist besonders gut geeignet, und speziell bei Kunststoff ist es der Einspritzguss.

Die Gesamtform des Ansaugkrümmers gemäß der vorliegenden Erfindung ist vorzugsweise derart gestaltet, dass er direkt auf dem Motor oder genauer gesagt auf dem Zylinderkopf des Motors angebracht werden kann (d.h. auf dem oberen Teil der Zylinder) und dass er so eine Zylinderkopfabdeckung integriert. In diesem Fall kann der Ansaugkrümmer ebenfalls funktionelle klassische Elemente der Zylinderkopfabdeckungen integrieren (wie z.B. einen Einfüllstutzen für das Motorenöl) und er ist im Allgemeinen mit geeigneten Befestigungsmitteln und/oder Öffnungen ausgestattet, die das Anbringen derartiger Mittel erlauben. Vorzugsweise hat die Mischkammer zu diesem Zweck Gruben, in die Öffnungen gebohrt sind, welche das direkte Anbringen des Ansaugkrümmers auf dem Motor erlauben. Diese Gruben können von der Mischkammer getrennte Teile sein. Wenn die Mischkammer aus mindestens zwei Teilen zusammengebaut ist, sind die Gruben vorzugsweise in einem dieser Teile integriert. Besonders vorteilhaft ist es, wenn die Mischkammer aus einem Gehäuse und einer Abdeckung besteht und wenn die Gruben in der Abdeckung integriert sind. Nach dieser Variante ist der Boden der Gruben (mittels Schweißen, Kleben, Clip... aber vorzugsweise mittels Schweißen und insbesondere, wenn der Ansaugkrümmer gemäß der Erfindung aus Kunststoff besteht, mittels Vibrationsschweißen) mit der Innenwand der Mischkammer verbunden, wodurch die Resistenz gegenüber einer Verdichtung der Struktur erhöht wird. Die Form der Gruben und ihre Position im Innenraum der Mischkammer sind hervorragend optimiert, um so gleichmäßige Luftströme zu den jeweiligen Zylindern des Motors zu begünstigen. Wenn die Gruben mittels Vibration geschweißt sind, dann hängt ihre Form ebenfalls vom Schweißwerkzeug ab. Zu beachten ist ebenfalls, dass, wenn die Ansaugkrümmer aus mindestens zwei Teilen zusammengebaut sind, die Gruben vorzugsweise gleichzeitig mit dem Zusammenbau der beiden Teile geschweißt werden. Letztendlich ist der Ansaugkrümmer gemäß dieser Variante der Erfindung (d.h. mit Integration der Zylinderkopfabdeckung) vorzugsweise mit mindestens einer Stelle ausgestattet, an der eine Zylinderkopfdichtung angebracht werden kann. Es ist besonders praktisch, zu diesem Zweck den äußeren Umfang der Extremitäten der Ansaugrohre auf Seiten des Zylinderkopfes mit einem Abfluss zu versehen.

Wie oben erklärt, kann mit dem Ansaugkrümmer gemäß der vorliegenden Erfindung die Ausströmdynamik kontrolliert werden (z.B. "Swirl"-Effekt), da er zwei Ansaugrohrreihen enthält, die jede problemlos verschlossen werden kann. Um also einen "Swirl"Effekt im unteren Drehzahlbereich zu erhalten, schließt man entweder die integrierten Ansaugrohre (sogenannte zentrale Ansaugrohre) oder die äußeren Ansaugrohre (sogenannte Tangentialansaugrohre). Vorzugsweise beinhaltet der Motor zwei Einlassventile pro Zylinder, von denen das eine über ein integriertes Rohr und das andere über ein außerhalb der Mischkammer gelegenes Rohr versorgt wird. Entweder die integrierten Rohre oder die äußeren Rohre sind mit einer Vorrichtung ausgestattet, mit der die Ventile geschlossen werden können. Die in dieser Variante der vorliegenden Erfindung verwendete Verschlussvorrichtung kann aus jedem marktgängigen Typ bestehen. In der Regel handelt es sich dabei um ein Drehelement. Es kann aus einem Teil mit einer zylindrischen Hülle bestehen oder aus verschiedenen beweglichen Verschlusselementen um eine gemeinsame Achse. Vorzugsweise ist die Vorrichtung so geformt, dass sie in geöffneter Position (bei hohem Ausstoß) nicht die Ausströmung der Luft in die Rohre behindert, die sie im unteren Drehzahlbereich verschließen soll. So kann diese Vorrichtung z.B. Aussparungen enthalten, die einen Raum in der Verlängerung der zu verschließenden Rohre begrenzen, wenn die Vorrichtung geöffnet ist. Als Alternative kann es sich auch um einfache Platten handeln, die auf einer gemeinsamen Drehachse, welche die Ansaugrohre von einem Ende zum anderen durchqueren, angebracht sind. Eine derartige Vorrichtung hat den Vorteil, dass sie einfach ist, allerdings auch den Nachteil, dass sie die Ausströmung in geöffneter Position behindern kann.

Die Vorrichtung gemäß dieser Variante der Erfindung erlaubt das Verschließen mehrerer Luftansaugrohre und der Verschließbefehl erfolgt simultan für alle zu verschließenden Rohre. Vorzugsweise ist die erreichte Verschlussrate identisch für jedes zu verschließende Rohr. Im Allgemeinen wird dieses Verschließen mit einem geeigneten Antriebsmechanismus erreicht. Wenn das Verschlusselement ein Drehelement ist, kann z.B. seine Drehachse an einem ihrer Enden mit einem pneumatischen Schalter versehen werden. Außerdem wird die Winkelposition der Vorrichtung gemessen, z.B. mittels eines Potentiometers.

Die Verschlussvorrichtung kann aus einem oder aus mehreren Materialien oder aus Zusammensetzungen hergestellt werden, die zu der Umgebung des Motors passen. Man kann z.B. ein oder mehrere Metalle verwenden, z.B. Stahl oder eine Aluminiumlegierung. Man kann ebenfalls Kunststoffe verwenden, vorzugsweise Thermoplaste. Insbesondere ist ein Kunststoff wie PA, vielleicht auch noch gefüllt (vorzugsweise mit Glasfasern), gut geeignet. Dieser Kunststoff kann (auf seiner Oberfläche oder in die Masse eingearbeitet) einen Zusatz enthalten, um seinen Reibungskoeffizienten zu verringern (z.B. PTFE), aber wiederum nicht in solchen Mengen, dass dadurch die mechanische Festigkeit leidet.

Die Form der Verschlussvorrichtung ist im Allgemeinen so gestaltet, dass sie in eine Reihe von Ansaugrohren eingebaut und somit in den Ansaugkrümmer gemäß dieser Variante der Erfindung integriert werden kann. So genügt es im Allgemeinen, eine Bohrung in einer der Reihen der Ansaugrohre vorzusehen und dort die Verschlussvorrichtung so zu befestigen, dass ihre Funktionsweise gewährleistet ist (im Allgemeinen durch Rotation). Es ist dabei zu beachten, dass die mit dieser Vorrichtung erreichte Dichtheit zwischen dem oberen und dem unteren Teil der verschlossenen Rohre vorzugsweise nicht perfekt ist. Insbesondere ist es vorzuziehen, wenn die Verschlussvorrichtung so gestaltet ist, dass in geschlossener Position eine Leckage zwischen dem oberen und dem unteren Teil der zu verschließenden Rohre entsteht. Man hat nämlich festgestellt, dass eine perfekte Dichtheit zu Verschmutzungsproblemen führen kann (insbesondere durch Ruß, der entweder durch "Blow-by"-Phänomene oder durch die Abgasumwälzung entstehen kann) und als Konsequenz zu einer Blockierung. Außerdem erlaubt eine gewisse Leckage, die Verluste durch Pumpen zu verringern, wobei eine ausreichende Kontrolle der Ausströmdynamik im unteren Drehzahlbereich aufrechterhalten bleibt. Darüber hinaus erleichtert die Tatsache, dass die Dichtheit nicht perfekt sein muss, die Herstellung des Teils (insbesondere hinsichtlich der einzuhaltenden Toleranzen) und erlaubt es insbesondere, die Kunststoffe erfolgreich zu verwenden.

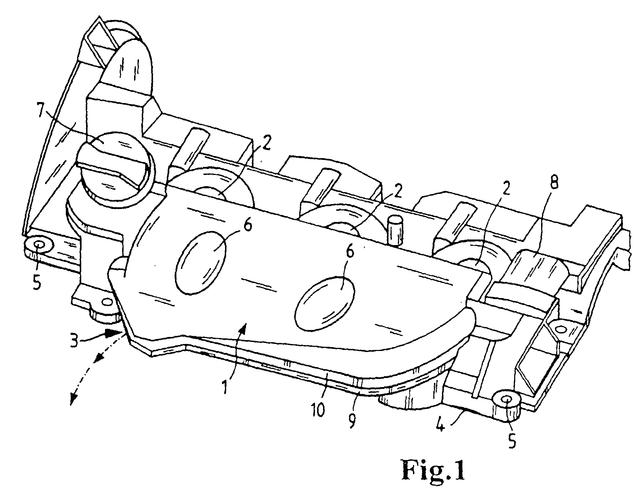

Die vorliegende Erfindung wird durch die Abbildungen 1 bis 3 in einer Weise dargestellt, die noch ausgebaut werden kann

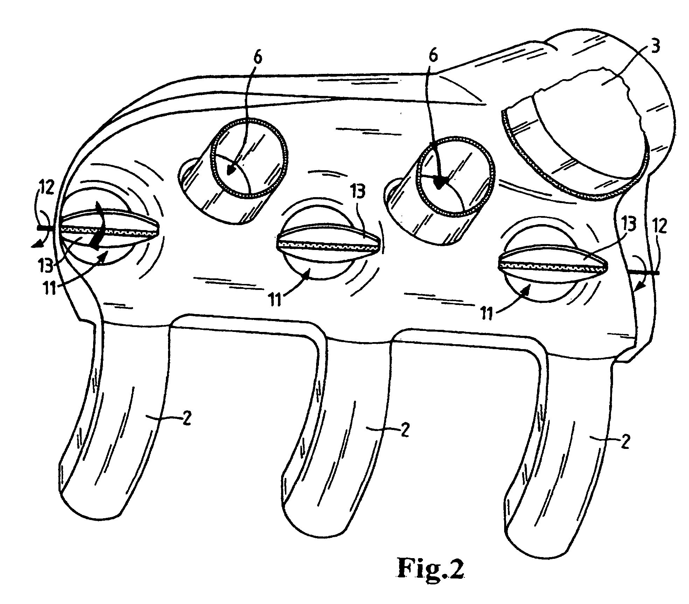

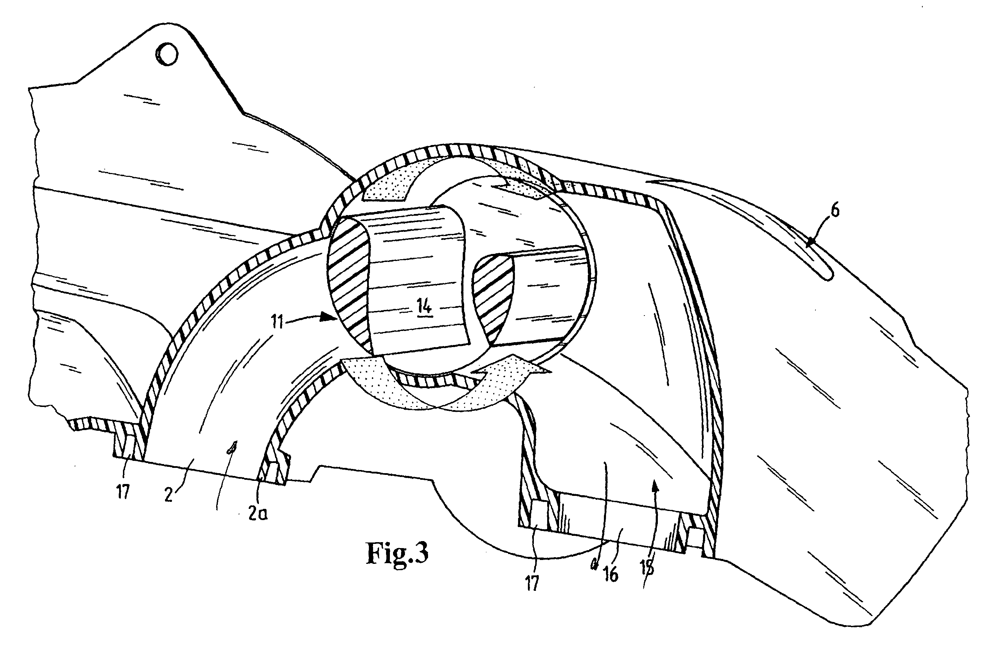

Abbildung 1 zeigt eine Gesamtansicht eines Ansaugkrümmers gemäß der Variante der vorliegenden Erfindung und betrifft einen Motor mit zwei Einlassventilen pro Zylinder. Die Abbildungen 2 und 3 zeigen jeweils einen horizontalen (parallel zu den beiden horizontalen Seiten der Mischkammer) und einen vertikalen Schnitt (quer zu den beiden horizontalen Seiten der Mischkammer) in der selben Vorrichtung.

In den Abbildungen werden identische Zahlen verwendet, um identische Teile oder Teile dieser Teile zu benennen.

So zeigt Abbildung 1 einen Ansaugkrümmer, der eine Mischkammer (1) und äußere, sekundäre Ansaugrohre (2) beinhaltet. Die Mischkammer (1) hat eine Öffnung (3) für die Hauptzufuhr der Luft. Dieser Ansaugkrümmer ist vorgesehen, mit seiner inneren Wand (4) direkt auf den Motor montiert zu werden (nicht gezeigt) und er ist zu diesem Zweck mit Öffnungen (5) ausgestattet, in die Befestigungsmittel eingeführt werden (Bolzen, Schrauben...). Einige dieser Offnungen (5) befinden sich im unteren Teil der Gruben (6), die eine geeignete Form haben, um mit ihrer unteren Grundfläche auf die untere Seite der Mischkammer (4) geschweißt zu werden.

Dieser Ansaugkrümmer integriert ebenfalls einen Öleinfüllstutzen (7) und eine Lagerung (8) für den Schalter einer Verschlussvorrichtung (nicht sichtbar in dieser Abbildung). Sie wurde aus zwei mittels Schweißen zusammengebauten Teilen hergestellt: ein Gehäuse (9), welches die meisten oben genannten Elemente enthält, sowie eine Abdeckung (10). Hier ist zu beachten, dass die Gruben (6) in die Abdeckung (10) integriert sind und dass diese mittels Vibrationsschweißen am Gehäuse (9) auf seinem Umfang und auf der Höhe der Gruben angebracht ist. Man erhält so eine kompakte Struktur mit einer Resistenz gegenüber einer hohen Verdichtung.

In Abbildung 2 (unvollständiger horizontaler Schnitt) kann man eine Verschlussvorrichtung (11) sehen, die aus einer Drehachse (12) besteht, auf welcher die Verschlusselemente (13) angebracht sind. Gemäß dieser Variante, die in dieser Abbildung gezeigt wird, ist die Verschlussvorrichtung, welche in der Lage ist, einen "Swirl"-Effekt zu erzeugen, in den äußeren sekundären Rohren (2) angebracht. Alternativ kann sie in den integrierten (primären) Rohren montiert werden, die in dieser Abbildung nicht sichtbar sind und die nur die Oberseite der Mischkammer zeigt.

In Abbildung 3 (vertikaler Schnitt) kann man eine andere Art der Verschlussvorrichtung (11) sehen, die aus einem zylindrischen Schieberventil (14) mit Aussparungen besteht, welche, wenn das Schieberventil geöffnet ist, mit den Rohrwänden (2) so fluchten, dass sie nicht das Ausströmen der Luft behindern. In dieser Abbildung sind ebenfalls die in der Mischkammer (1) integrierten Rohre ersichtlich, die konisch geformt sind und in eine Öffnung (16) münden, durch die eines der Einlassventile der Zylinder des Motors direkt versorgt wird, während das andere Ventil durch das Rohr (2) versorgt wird. Man erkennt außerdem die Form der Grube (6), für die problemlos ein Werkzeug zum Vibrationsschweißen verwendet werden kann. Die Stelle und die Form dieser Grube (sowie der anderen Gruben) wurde ebenfalls optimiert, um den Luftstrom zwischen den verschiedenen Zylindern des Motors so gut wie möglich auszugleichen. Letztendlich erkennt man am Rand der Rohre (sowohl zentrale als auch Tangentialrohre) eine Vertiefung (17), in der eine Zylinderkopfdichtung (nicht gezeigt) angebracht werden kann.

## Patentansprüche

1. Luftansaugkrümmer in einem Mehrzylindermotor, der eine Mischkammer (1) hat, die durch eine Wand (4) begrenzt ist, und einen aus Ansaugrohren (2) bestehenden Verteiler, mit dem die Zylinder des Motors mit Luft versorgt werden, wobei die Mischkammer (1) mindestens einige der Ansaugrohre integriert, wobei die Mischkammer (1) im wesentlichen aus einem Gehäuse (9) und einer durch Schweißen zusammengebauten Abdeckung (10) besteht **dadurch gekennzeichnet, dass** der Luftansaugkrümmer in eine Zylinderkopfabdeckung integriert ist.

2. Luftansaugkrümmer gemäß Anspruch 1, **dadurch gekennzeichnet, dass** die in der Mischkammer (1) integrierten Ansaugrohre (2) einen Teil der Wand der Mischkammer (1) beinhalten, welche konisch gestaltet ist und in eine Öffnung (16) mündet, welche die direkte Luftversorgung eines Zylinders des Motors erlaubt.

3. Luftansaugkrümmer gemäß einer der oben genannten Ansprüche, **dadurch gekennzeichnet, dass** das die Mischkammer (1) ein oder mehrere hervorstehende Elemente in ihrem Inneren beinhaltet, die ein Hindernis darstellen und so der Luftausströmung Einschränkungen entgegensetzen.

4. Luftansaugkrümmer gemäß einer der oben genannten Ansprüche, **dadurch gekennzeichnet, dass** er auf der Grundlage einer Verbundmasse aus Polyamid 6 (PA 6) und Glasfasern besteht.

5. Luftansaugkrümmer gemäß Anspruch 1, **dadurch gekennzeichnet, dass** die Mischkammer (1) Gruben (6) enthält, in die Öffnungen gebohrt sind, welche die direkte Befestigung des Ansaugkrümmers auf dem Motor erlauben.

6. Luftansaugkrümmer gemäß einer der oben genannten Ansprüche, **dadurch gekennzeichnet, dass** der Motor zwei Einlassventile pro Zylinder beinhaltet, von denen eines über ein integriertes Ansaugrohr (2) und das andere über ein außerhalb der Mischkammer (1) befindliches Ansaugrohr (2) versorgt wird, und dadurch, dass entweder die integrierten Ansaugrohre (2) oder die äußeren Ansaugrohre (2) mit einer Verschlussvorrichtung (11) ausgestattet sind, mittels derer sie geschlossen werden können.

7. Luftansaugkrümmer gemäß des zuletzt genannten Anspruchs, **dadurch gekennzeichnet, dass** die Verschlussvorrichtung (11) Aussparungen enthält, die - wenn die Vorrichtung in geöffneter Position ist - einen Raum in der Verlängerung der zu verschließenden Ansaugrohre (2) begrenzen.

8. Luftansaugkrümmer gemäß Anspruch 8 oder 9, **dadurch gekennzeichnet, dass** die Verschlussvorrichtung(11) so gestaltet ist, dass in geschlossener Position eine gewisse Leckage zwischen dem oberen und dem unteren Teil der zu verschließenden Ansaugrohre (2) entsteht.

## Claims

1. Air inlet manifold in a mufti-cylinder engine, said air inlet manifold has a mixing chamber (1), which is defined by a wall (4), and a distributor, which comprises intake pipes (2), with which the cylinders of the engine are supplied with air, wherein the mixing chamber (1) incorporates at least one of the intake pipes, wherein the mixing chamber comprises substantially a housing (9) and a cover (10), which are joined together by means of welding, **characterised in that** the air inlet manifold is incorporated into a cylinder head cover.

2. Air inlet manifold according to claim 1, **characterised in that** the intake pipes (2) incorporated in the mixing chamber (1) contain a portion of the wall of the mixing chamber (1), which is in a conical form and terminates into an opening (16), which enables one cylinder of the engine to be directly supplied with air.

3. Air inlet manifold according to one of the abovementioned claims, **characterised in that** the mixing chamber (1) contains one or more protruding elements in its interior, said elements representing an obstacle and in this way placing restrictions in the path of the outflowing air.

4. Air inlet manifold according to one of the abovementioned claims, **characterised in that** said inlet manifold is based on a composite mass produced from polyamide 6 (PA 6) and glass fibres.

5. Air inlet manifold according to claim 1, **characterised in that** the mixing chamber (1) contains grooves (6), into which openings are bored, which enable the air inlet manifold to be secured directly on the engine,

6. Air inlet manifold according to one of the abovementioned claims, **characterised in that** the engine contains two inlet valves per cylinder, one of said inlet valves being supplied via an incorporated intake pipe (2) and the other inlet valve being supplied by an intake pipe (2) which is situated externally of the mixing chamber (1), and **in that** either the incorporated intake pipes (2) or the external intake pipes (2) are provided with a closing apparatus (11), by means of which they can be closed.

7. Air inlet manifold according to the last-mentioned claim, **characterised in that** the closing apparatus (11) contains recesses, which - when the apparatus is in the open position - define a space in the elongation of the intake pipes (2) to be closed.

8. Air inlet manifold according to claim 8 or 9, **characterised in that** the closing apparatus (11) is developed in such a manner that in the closed position there is a certain leakage between the upper portion and the lower portion of the intake pipes (2) to be closed.

## Revendications

1. Collecteur d'admission dans un moteur à combustion interne multi-cylindres qui comprend une chambre de carburation (1) délimitée par une paroi (4), et un distributeur constitué de tubulures d'admission (2) qui alimente en air les cylindres du moteur, la chambre de carburation (1) intégrant au moins certaines des tubulures d'admission, la chambre de carburation (1) étant constituée essentiellement d'un corps (9) et d'un couvercle (10) assemblés par soudage,
**caractérisé en ce que**
le collecteur d'admission est intégré dans un couvercle de culasse.

2. Collecteur d'admission selon la revendication 1,
**caractérisé en ce que**
les tubulures d'admission (2) intégrées dans la chambre de carburation (1) comprennent une partie de la paroi de la chambre de carburation (1) qui est de forme conique et débouche dans une ouverture (16) qui permet l'alimentation en air directe d'un cylindre du moteur.

3. Collecteur d'admission selon l'une des revendications précédentes,
**caractérisé en ce que**
la chambre de carburation (1) contient un ou plusieurs éléments saillants qui constituent un obstacle et opposent ainsi des restrictions à l'écoulement de l'air.

4. Collecteur d'admission selon l'une des revendications précédentes,
**caractérisé en ce qu'**
il est constitué d'une masse composite de polyamide 6 (PA 6) et de fibres de verre.

5. Collecteur d'admission selon la revendication 1,
**caractérisé en ce que**
la chambre de carburation (1) contient des puits (6) dans lesquels sont percées des ouvertures qui permettent de fixer directement le collecteur d'admission sur le moteur.

6. Collecteur d'admission selon l'une des revendications précédentes,
**caractérisé en ce que**
le moteur comprend deux soupapes d'admission par cylindre, dont l'une est alimentée par une tubulure d'admission (2) intégrée et l'autre par une tubulure d'admission (2) montée à l'extérieur de la chambre de carburation (1), et les tubulures d'admission (2) intégrées ou les tubulures d'admission (2) extérieures sont équipées d'un dispositif de fermeture (11) qui peut les obturer.

7. Collecteur d'admission selon la dernière revendication mentionnée,
**caractérisé en ce que**
le dispositif de fermeture (11) contient des évidements qui, lorsque le dispositif est en position ouverte, délimitent un espace dans le prolongement des tubulures d'admission (2) à fermer.

8. Collecteur d'admission selon la revendication 8 ou 9,
**caractérisé en ce que**
le dispositif de fermeture (11) est conçu de telle sorte qu'il se produit en position fermée une fuite entre les parties supérieure et inférieure des tubulures d'admission (2) à fermer.
